# EUROPÄISCHE PATENTSCHRIFT

(11) **EP 0 505 716 B1**
(45) Veröffentlichungstag und Bekanntmachung des Hinweises auf die Patenterteilung: **14.01.1998**
(21) Anmeldenummer: 92102571.4
(22) Anmeldetag: 15.02.1992
(51) Int. Cl.: H04B 1/713, H03H 7/40

(54) **Verfahren zur Impedanzanpassung eines nach dem Frequenzsprungverfahren betriebenen Hochfrequenzsenders**
Method for impedance matching of a high frequency transmitter operating according to a frequency hopping method
Procédé d'adaptation d'impedance d'un émetteur haute fréquence fonctionant selon une méthode en saut de fréquence

(30) Priorität: 26.03.1991 DE 4109816
(43) Veröffentlichungstag der Anmeldung: 30.09.1992
(73) Patentinhaber: Rohde & Schwarz GmbH & Co. KG, D-81671 München (DE)
(72) Erfinder: Greiner, Günter, Dr.-Ing., W-8000 München 80 (DE)
(74) Vertreter: Graf, Walter, Dipl.-Ing.

(56) Entgegenhaltungen:
- EP-A- 0 210 746
- DE-A- 3 644 477

## Beschreibung

Die Erfindung betrifft ein Verfahren laut Oberbegriff des Hauptanspruches.

Ein Verfahren dieser Art ist bekannt (DE-A- 3644477, DE 35 27 554 A1). Bei diesem bekannten Verfahren wird die Antenne über ein Antennenanpaßgerät aus dem Frequenzsprungsender gespeist, das innerhalb des Gesamtfrequenzbereiches von beispielsweise 1,5 bis 30 MHz über die auch den Frequenzsprungsender steuernde Steuereinrichtung auf jede beliebige Frequenz abstimmbar ist und das dann in Umgebung dieser Abstimmfrequenz innerhalb eines vorbestimmten Frequenzbereiches von beispielsweise 2 MHz eine vorbestimmte Fehlanpassung von beispielsweise VSWR = 3 nicht überschreitet. Diese Eigenschaft wird unter Berücksichtigung der Bandbreite der verwendeten Antenne durch entsprechende Dimensionierung der Transformationselemente des Antennenanpaßgerätes erreicht (Spalte 3, Zeilen 25 bis 34 der DE 35 27 554 A1). Bei diesem bekannten Verfahren wird also innerhalb des Frequenzintervalles, in welchem der Frequenzsprungsender arbeitet, eine geringe Fehlanpassung toleriert. Dieses bekannte Verfahren kann zwar auch bei Frequenzsprungsendern eingesetzt werden, die in mehreren über das Gesamtfrequenzband verteilten Frequenzintervallen arbeiten, indem für jedes dieser Intervalle das Antennenanpaßgerät jeweils so abgestimmt wird, daß die noch tolerierte Fehlanpassung jeweils in jedem dieser Intervalle eingehalten wird. Auf diese Weise könnte auch für unmittelbar aneinander anschließende Frequenzintervalle eine entsprechende Abstimmung des Antennenanpaßgerätes vorgenommen werden, so daß dann ein relativ breites Frequenzintervall überdeckt wird.

In der Praxis ist es schwierig, die jeweiligen Abstimmfrequenzwerte für das Antennenanpaßgerät so vorzubestimmen, daß die tolerierte Fehlanpassung auch tatsächlich innerhalb des oder der vorgegebenen Frequenzintervalle(s) nicht überschritten wird, denn die komplexe Impedanz der Antenne ist stark abhängig von ihrer Umgebung, was insbesondere bei mobilen Frequenzsprungsenderanlagen dazu führt, daß die Bandbreite der Antenne sich von Standort zu Standort ändert, so daß auch der Frequenzbereich, innerhalb welchem die vorbestimmte tolerierte Fehlanpassung nicht überschritten wird, sich ändert.

Es wurde schon versucht (DE 36 44 477 A1), diesen Nachteil dadurch zu vermeiden, daß jeweils vor Aufnahme des Frequenzsprungbetriebes am Betriebsort der Antenne in einer Adaptionsphase ausgehend von der unteren Grenzfrequenz des breiten Frequenzbandes die Transformationselemente des Antennenanpaßgerätes so geschaltet werden, daß das Minimum des Stehwellenverhältnisses (VSWR) bei einer über der Anfangsfrequenz liegenden Frequenz auftritt und das Stehwellenverhältnis bei der Anfangsfrequenz unterhalb des vorgegebenen Maximalwertes von beispielsweise 3 liegt. Bei unveränderter Einstellung der Transformationselemente wird anschließend eine über der Frequenz des VSWR-Minimums liegende Endfrequenz ermittelt, für welche das VSWR wiederum unterhalb des Maximalwertes liegt. Gleichzeitig wird die Anfangsfrequenz als Stützfrequenz und die Einstellung der Transformationselemente des Antennenanpaßgerätes als Wertepaar gespeichert. Von dem zuletzt ermittelten Endfrequenzwert ausgehend wird dieses Verfahren wiederholt, bis die obere Frequenzgrenze des breiten Frequenzbandes erreicht ist. Auf diese Weise werden die über das breite Frequenzband verteilten Abstimmfrequenzwerte für das Antennenanpaßgerät ermittelt, mit denen in aneinander anschließenden Bereichen des Frequenzbandes die tolerierbare Fehlanpassung nicht überschritten wird, im anschließenden Frequenzsprungbetrieb kann das Antennenanpaßgerät damit schnell jeweils auf diejenige Abstimmfrequenz eingestellt und damit seine Transformationselemente auf die zu dieser Abstimmfrequenz zugehörige Einstellung abgestimmt werden, in deren Anpassungs-Toleranzbereich die momentane Sendefrequenz des Frequenzsprungsenders liegt.

Diese bekannte Lösung ist jedoch noch relativ zeitaufwendig, sie erfordert unmittelbar am Betriebsort des Frequenzsprungsenders eine Vielzahl von VSWR-Messungen an der Antennenzuleitung über das gesamte breite Frequenzband. Da pro Fehlanpassungs-Toleranzbereich jeweils 3 VSWR-Messungen durchgeführt werden müssen, wird das dazu benutzte Testsignal unnötig lange abgestrahlt, was vor allem bei militärischen Anlagen nachteilig ist. Da die Testsignale über einen breiten Frequenzbereich abgestrahlt werden, in dem möglicherweise auch nicht zur allgemeinen Nutzung freigegebene Frequenzen (VO-Funk, z.B. Rundfunksender, Seenotruf) liegen, die bei der Adaptionshase gestört werden können.

Es ist daher Aufgabe der Erfindung, ausgehend von einem bekannten Verfahren laut Oberbegriff des Hauptanspruches (DE 35 27 554) ein anderes und besseres Verfahren zum Abstimmen des Antennenanpaßgerätes eines Frequenzsprungsenders aufzuzeigen, bei dem der Zeitaufwand zur Gewinnung der Einstellwerte und die Störung der Mitbenutzer des Frequenzbandes wesentlich verringert ist.

Diese Aufgabe wird ausgehend von einem Verfahren laut Oberbegriff des Hauptanspruches durch dessen kennzeichende Merkmale gelöst. Vorteilhafte Weiterbildungen ergeben sich aus den Unteransprüchen.

Beim erfindungsgemäßen Verfahren werden die Abstimmfrequenzwerte für das Antennenanpaßgerät aus in der Steuereinrichtung abgespeicherten minimalen Bandbreitewerten der Antennen/Antennenanpaßgerät-Einheit ermittelt, die nicht erst am Betriebsort der Antenne, sondern bereits vorher beispielsweise im Prüffeld der Herstellfirma gemessen werden. Unter Bandbreite wird in diesem Fall die Breite des Frequenzbereiches in Umgebung einer Mittenfrequenz verstanden, in welcher die Fehlanpassung nicht größer als z.B. VSWR = 3 ist. Die Bandbreitenmessung kann in bekannter Weise beispielsweise so durchgeführt werden, daß in z.B. 50 KHz-Abständen innerhalb des breiten Gesamtfrequenzbandes von beispielsweise 1,5 bis 30 MHz festgestellt wird, bei welcher jeweils höheren bzw. niedrigeren Frequenz das Stehwellenverhältnis auf der Antennenzuleitung den vorgegebenen Maximalwert von beispielsweise VSWR = 3 erreicht. Am Betriebsort der Antenne ist es dann nur noch nötig, bei wenigen durch Rechnung bestimmten Abstimmfrequenzwerten des Gesamtfrequenzbandes - also beispielsweise nur in einem begrenzten Frequenzintervall, in welchem ein Frequenzsprungbetrieb durchgeführt werden soll - durch kurzzeitiges Einspeisen eines entsprechenden Testsignals diejenige Einstellung der Transformationselemente des Antennenanpaßgerätes bei dieser Abstimmfrequenz zu bestimmen und abzuspeichern, die unter den momentanen Umgebungsverhältnissen der Antenne ein minimales Stehwellenverhältnis ergeben. Im anschließenden Frequenzsprungbetrieb wird das Antennenanpaßgerät zusammen mit der Frequenzumschaltung des Senders nur noch auf diese abgespeicherten Einstellwerte der Transformationselemente abgestimmt. Die Abstimmfrequenzen des Antennenanpaßgeräts werden dabei so gelegt, daß die zugehörigen Frequenzbereiche mit den vorgegebenen Bandbreiten jeweils die vorgegebenen Frequenzsprung-Sendefrequenzen überdecken. Da diese Frequenzbereiche nicht aneinander anschließen müssen, kann die Dauer der Adaptionsphase weiter verkürzt werden.

Das erfindungsgemäße Verfahren ermöglicht es erstmals, die Abstimmvorgänge für das Antennenanpaßgerät nur auf diejenigen Frequenzintervalle zu beschränken, bei denen anschließend auch tatsächlich ein Frequenzsprungbetrieb durchgeführt wird. Dadurch wird am Aufstellungsort die Abstimmzeit wesentlich verringert und damit auch die Zeit einer eventuellen Testsignalabstrahlung.

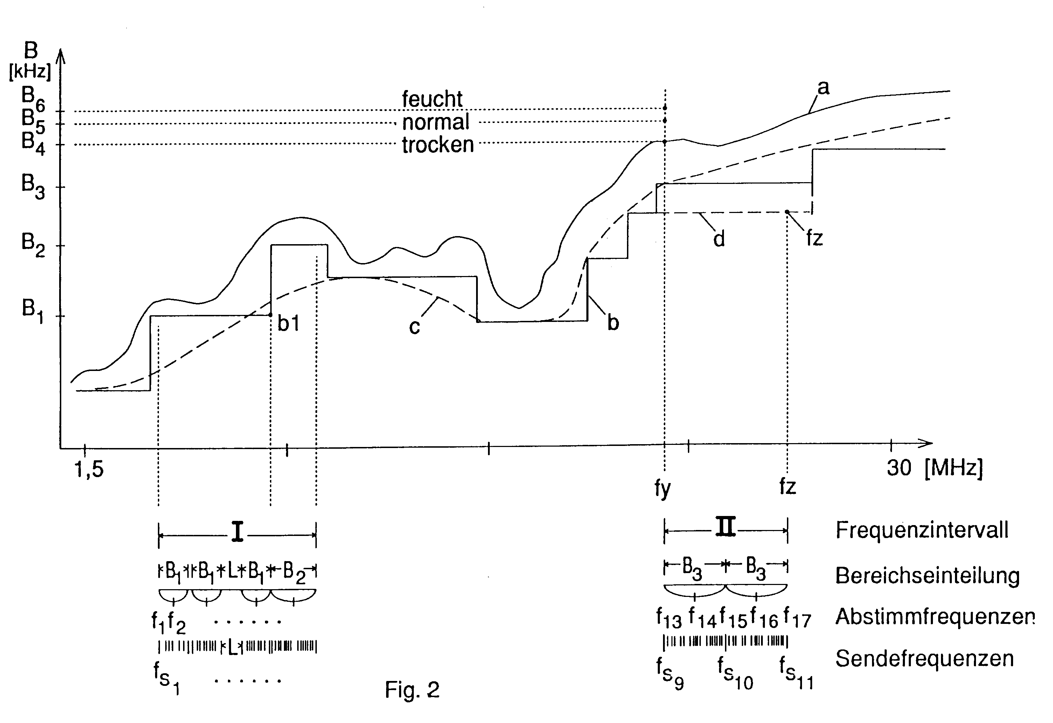

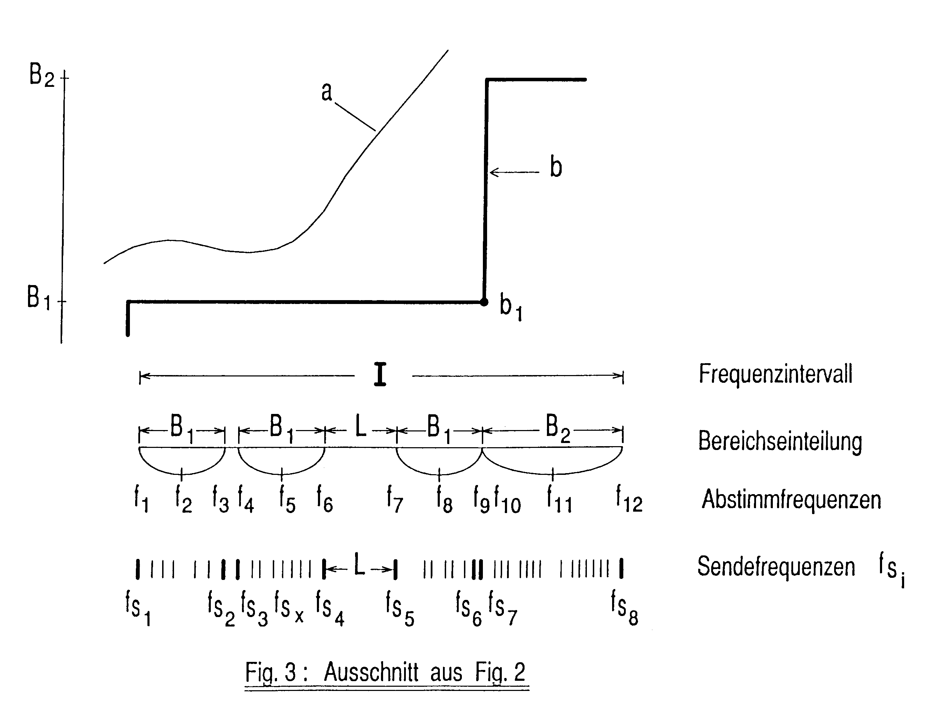

Für die Bestimmung der Abstimmfrequenzwerte nach dem erfindungsgemäßen Verfahren können unmittelbar die minimalen Bandbreitenwerte benutzt werden, die sich im Gesamtfrequenzbereich jeweils unter den verschiedenen möglichen Umgebungsbedingungen (normal, feucht oder trocken) ergeben (Kurve a nach Fig. 2), gemäß einer Weiterbildung der Erfindung hat es sich jedoch als vorteilhaft erwiesen, dazu eine geglättete Kurve der Minimalwerte zu benutzen, die von der ursprünglich gemessenen Kurve abgeleitet ist (Kurve b bzw. c nach Fig. 2). Damit kann die Anzahl der Bandbreitenmessungen am Betriebsort weiter verringert werden, da in einem gegebenen Frequenzintervall für benachbarte Abstimmfrequenzwerte die Bandbreite als konstant bzw. mit bekannter Steigung oder Krümmung angenommen werden kann.

Wenn der Frequenzsprungbetrieb unter extremen Umgebungsbedingungen durchgeführt werden soll, die bei der ursprünglichen Bandbreitenmessung voraussichtlich noch nicht berücksichtigt werden konnten, ist es vorteilhaft, im Sinne des Unteranspruchs eine entsprechende Korrektur der abgespeicherten Bandbreitenwerte durchzuführen; dazu genügt es, an einer oder mehreren Stellen des Gesamtfrequenzbandes, vorzugsweise jedoch nur innerhalb des jeweiligen Frequenzsprung-Intervalls, eine entsprechende Kontrollmessung durchzuführen und die Bandbreiten/Frequenz-Funktionskurve durch entsprechendes Verschieben zu geringeren Werten zu korrigieren.

Das erfindungsgemäße Verfahren ist nicht nur zum Betreiben von Hochfrequenzsendern nach dem Frequenzsprungverfahren geeignet, sondern in analoger Weise auch zum Betrieb der zugehörigen Empfänger, bei denen eine entsprechende Antennenanpassung von Vorteil ist.

Die Erfindung wird im folgenden anhand schematischer Zeichnungen an einem Ausführungsbeispiel näher erläutert.

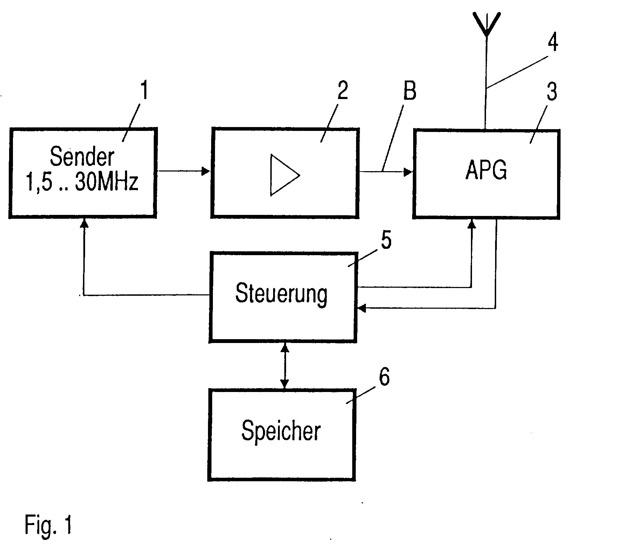

Fig. 1 zeigt das Prinzipschaltbild eines Kurzwellensenders, der nach dem Frequenzsprungverfahren in ausgewählten Frequenzintervallen eines Gesamtfrequenzbandes von beispielsweise 1,5 bis 30 MHz betreibbar ist. Dieser Frequenzsprungsender besteht aus einem Steuersender 1, der über einen HF-Leistungsverstärker 2 und ein Antennenanpaßgerät 3 eine Antenne 4 speist. Der Steuersender 1 wird nach einem vorbestimmten empfangsseitig bekannten Frequenzschema auf beliebige vorgegebene Sendefrequenzen fₛ beispielsweise innerhalb der zwei Frequenzintervalle I und II (Fig. 2) des Gesamtfrequenzbandes in schneller Folge umgeschaltet. Die Steuerung dieser Frequenzumschaltung des Steuersenders 1 erfolgt über eine Steuereinrichtung 5, die gleichzeitig auch das Antennenanpaßgerät 3 steuert.

Fig. 2 zeigt mit der Kurve a einen typischen Verlauf der Bandbreite B einer Antennen/Antennenanpaßgerät-Einheit 3,4 eines mobilen Kurzwellensenders über der Frequenz f in dem Gesamtfrequenzband von 1,5 bis 30 MHz. Diese Kurve a wird in bekannter Weise durch Messen ermittelt, sie entspricht jeweils dem minimalen Bandbreitenwert unter typischen Umgebungsbedingungen der Antenne. Unter trockenen Umgebungsbedingungen besitzt die Antenne am Eingang des Antennenanpaßgerätes 3 bei der Abstimmfrequenz f_{y} beispielsweise die Bandbreite B4, bei normalen Umgebungsbedingungen eine größere Bandbreite B5 und bei feuchter Umgebung eine noch größere Bandbreite von B6, der minimale Bandbreitenwert für diese Abstimmfrequenz ist also in diesem Beispiel B4. Auf diese Weise wird durch Vermessen des Gesamtfrequenzbandes die Kurve a ermittelt. Das Minimum im mittleren Frequenzbereich ist auf eine Resonanz des Antennenmastes zurückzuführen. Unterschiedliche dielektrische Umgebungsbedingungen der Antenne können deren Bandbreite vergrößern oder verringern. Auch Änderungen der Geometrie beim Aufbau der Antennenanlage können zu einer entsprechenden Verschiebung der Bandbreitenwerte zu höheren oder niedrigeren Frequenzen führen.

Von dieser gemessenen Kurve a der jeweils minimalen Bandbreitenwerte B in Abhängigkeit von der Frequenz wird eine geglättete Kurvenform b abgeleitet, deren Ordinatenwerte stets kleiner als die der Kurve a sind und durch welche starke Schwankungen der Kurve a nivelliert werden. Die Kurve b nach Fig. 2 zeigt den Sonderfall einer geglätteten Kurve in Form eine Treppenkurve, die sich aus möglichst breiten Abschnitten von konstanter Bandbreite B zusammensetzt. Denkbar ist auch eine Glättung in Form einer Kurve, die sich aus aneinander anschließenden Kurvenabschnitten von jeweils konstanter Steigung zusammensetzt. Auch eine gekrümmte geglättete Kurve, angelehnt an die Kurve a ist denkbar, wie dies mit dem Kurvenstück c in Fig. 2 angedeutet ist.

Diese durch Messung und anschließende Glättung ermittelten Bandbreiten-Funktionsverläufe b bzw. c werden als Frequenz-Bandbreiten-Wertepaare bereits im Herstellerwerk in einem Speicher 6 der Steuereinrichtung 5 abgespeichert.

Am Betriebsort des Senders werden die Einstellungen der Transformationselemente des Antennenanpaßgerätes 3 in Abhängigkeit von diesen abgespeicherten Bandbreitenwerten wie folgt ermittelt:

Soll der Frequenzsprungsender beispielsweise nach Fig. 2 und 3 nur in den beiden Frequenzintervallen I und II betrieben werden und zwar noch dazu im Intervall I mit mehr oder weniger großen Lücken L zwischen den einzelnen Sendefrequenzen fₛ, ist also die Steuereinrichtung 5 für die Frequenzumschaltung des Steuersenders 1 so programmiert, daß der Steuersender im Intervall I zwischen den Sendefrequenzen fₛ₁ bis fₛ₈ und im Intervall II zwischen fₛ₉ und fₛ₁₁ umgeschaltet wird, so ergibt sich aus der Kurve b, daß im Intervall I die Bandbreite der Antenne zunächst B₁ (kHz) beträgt und am Ende mit einer Sprungstelle b1 auf einen Bandbreitenwert B₂ übergeht. Für die unterste Sendefrequenz fₛ₁, die in dem Beispiel der unteren Frequenzgrenze f₁ des Intervalls I entspricht, ergibt sich mit der Bandbreite B₁ eine erste Abstimmfrequenz f₂ für das Antennenanpaßgerät nach der Beziehung f₂ = fₛ₁ + B₁/2. Die bei dieser Abstimmfrequenz f₂ ermittelten Einstellwerte des Antennenanpaßgerätes 3 werden zusammen mit dieser Abstimmfrequenz f₂ im Speicher 6 gespeichert. Die obere Grenze des ersten Abstimmbereiches ergibt sich aus der Bandbreite B₁ zu f₃, die noch die Sendefrequenz fₛ₂ abdeckt. Anschließend wird dann in gleicher Weise beginnend mit der der Frequenz fₛ₂ nächstfolgenden Sendefrequenz fₛ₃, die der unteren Frequenzgrenze f₄ entspricht, unter Berücksichtigung der Bandbreite B₁ die nächste Abstimmfrequenz f₅ bestimmt nach der Beziehung f₅ = fₛ₃ + B₁/2, die obere Bereichsgrenze f₆ für diesen nächsten Abstimmbereich ergibt sich wiederum aus der Bandbreite B₁. In dem Ausführungsbeispiel besteht zwischen der Sendefrequenz fₛ₄ und der Sendefrequenz fₛ₅ eine größere Lücke L, in der keine Sendefrequenzen liegen. Die Abstimmfrequenz f₈ für den nächsten Bereich wird in gleicher Weise beginnend mit fₛ₅ unter Berücksichtigung der Bandbreite B₁ nach der Beziehung f₈ = fₛ₅ + B₁/2 ermittelt, die obere Bereichsgrenze ist f₉, die die Sendefrequenz fₛ₆ abdeckt. Auch diese Abstimmfrequenzen f₅ und f₈ werden wieder zusammen mit den entsprechenden Einstellwerten des Antennenanpaßgerätes 3 im Speicher 6 gespeichert. Nach der Unstetigkeitsstelle b₁ der Kurve b erhöht sich die Bandbreite auf den Wert B₂, für die nächstfolgende Sendefrequenz fₛ₇, die der Bereichsgrenze f₉ entspricht, wird nach dem gleichen Schema unter Berücksichtigung der Bandbreite B₂ die Abstimmfrequenz f₁₁ = fₛ₇ + B₂/2 ermittelt, mit der oberen Bereichsgrenze f₁₂ ist auch das Ende des Intervalls I erreicht. Damit ist dann das Intervall I im Bereich der Sendefrequenzen fₛ₁ bis fₛ₈ voll abgedeckt, wobei die einzelnen Abstimmbereiche nicht aneinander anschließen, sondern je nach Lage der Sendefrequenz dazwischen mehr oder weniger große Lücken L aufweisen. Eventuelle Lücken L im Schema der Sendefrequenzen fₛ des Frequenzsprungsenders werden also ausgespart. Der Rechner in der Steuereinrichtung 5 ermittelt auf diese Weise die geringste Anzahl von Abstimmfrequenzwerten für das Antennenanpaßgerät 3.

Beim Intervall II ist in dem Ausführungsbeispiel vorausgesetzt, daß die Sendefrequenzen fₛ₉ bis fₛ₁₁ lückenlos aneinander anschließen, in diesem Fall also auch die Abstimmbereiche des Antennenanpaßgerätes mit der zugehörigen Bandbreite B nach dem obenerwähnten Schema lückenlos aneinander anschließend ermittelt werden, die ermittelten Abstimmfrequenzen f₁₄ und f₁₆ werden wieder mit den zugehörigen Einstellwerten des Antennenanpaßgerätes im Speicher abgespeichert, die obere Bereichsgrenze f₁₅ schließt unmittelbar an die untere Bereichsgrenze des nachfolgenden Abstimmbereiches an, da hier bei der Sendefrequenz fₛ₁₀ keine Lücke besteht.

Wird anstelle der in Fig. 2 und 3 dargestellten Treppenkurve b eine sich aus Kurvenabschnitten mit konstanter Steigung zusammensetzenden Dreieckkurve oder sogar eine gekrümmte Kurve c mit vorzugsweise vorbestimmter konstanter Krümmung verwendet, so wird dies durch entsprechende Interpolationsrechnung im Rechner bei der Ermittlung der Abstimmwerte entsprechend berücksichtigt.

Nach Abschluß dieses Adaptionsverfahrens sind für beide Intervalle I und II die jeweiligen Einstellwerte für das Antennenanpaßgerät 3 gespeichert und je nach jeweils wirksamer Sendefrequenz fₛ innerhalb der Intervalle wird das Antennenanpaßgerät 3 nur noch zwischen diesen Abstimmfrequenzen f₂, f₅, f₈, f₁₁, f₁₄ und f₁₆ umgeschaltet, für die Sendefrequenz fₛₓ im Intervall I wird das Antennenanpaßgerät beispielsweise auf die Abstimmfrequenz f₅ abgestimmt, also auf die zu dieser Abstimmfrequenz f₅ zugehörigen Einstellwerte eingestellt, so daß innerhalb der Bandbreite B₁ (kHz) eine Anpassung mit VSWR ≦3 gewährleistet ist.

Beim erfindungsgemäßen Adaptionsverfahren wird mit möglichst wenigen Abstimmfrequenzenwerten für das Antennenanpaßgerät das vorgegebene Frequenzsprungschema überdeckt, die Zahl der Abstimmbereiche, bei denen die vorgegebene Anpassung garantiert ist, wird also auf ein Minimum beschränkt, da die Abstimmbereiche angepaßt auf die jeweiligen Sendefrequenzen nur so gelegt werden, daß eventuelle Lücken im Frequenzschema auch beim Abstimmgerät ausgelassen werden, der Gesamtfrequenzbereich also nicht schematisch durch aneinander anschließende Abstimmbereiche abgedeckt wird, sondern nur in den tatsächlich benutzten Intervallen des Frequenzsprungsenders.

Bei extremen Umgebungsbedingungen kann der ursprünglich ermittelte Bandbreitenverlauf nach Kurve b in seltenen Fällen unterschritten werden. Für diesen Fall hat es sich als zweckmäßig erwiesen, vor Ausführung des Abstimmvorganges noch eine entsprechende Kontrollmessung an einer oder mehreren Stellen des Gesamtfrequenzbandes durchzuführen. So ist es beispielsweise möglich, bei der Frequenz f_{z} durch Einspeisen eines entsprechenden Testsignales noch einmal die Bandbreite (B) am Eingang des Antennenanpaßgerätes 3 zu messen; ist diese kleiner als gemäß Kurve b, so kann entweder die gesamte Kurve b entsprechend nach unten verschoben werden oder, falls nur eine Korrektur für das Intervall II gewünscht wird, nur der entsprechende Abschnitt der Kurve b, wie dies bei d gestrichelt angedeutet ist. Bei der anschließenden Bestimmung der Abstimmfrequenzwerte für die Ermittlung der Einstellung der Transformationselemente wird dann mit diesen entsprechend korrigierten Bandbreitenwerten (Kurve d) gearbeitet. In gleicher Weise kann auch eine eventuelle Bandbreitenänderung einer geglätteten gekrümmten Funktionskurve c korrigiert werden, indem die ganze Kurve c oder nur der dem jeweiligen Intervall zugeordnete Kurvenzweig nach unten zu dem neu gemessenen Bandbreitenwert korrigiert wird.

## Patentansprüche

1. Verfahren zur Impedanzanpassung eines Hochfrequenzsenders (1), der nach dem Frequenzsprungverfahren mittels einer Steuereinrichtung (5) in mindestens einem vorgegebenen Frequenzintervall (I, II) eines breiten Gesamtfrequenzbandes schnell zwischen unterschiedlichen Sendefrequenzen (fₛ) umgeschaltet wird, unter Verwendung eines zwischen Sender (1) und Antenne (4) angeordneten Antennenanpaßgerätes (3), das ebenfalls über die Steuereinrichtung (5) innerhalb des Gesamtfrequenzbandes auf jede beliebige Frequenz abstimmbar ist und das unter Einbeziehung der Antenne so ausgebildet ist, daß in Umgebung der Abstimmfrequenz des Antennenanpaßgerätes innerhalb eines Frequenzbereiches mit vorbestimmter Bandbreite (B₁) eine vorbestimmte Fehlanpassung nicht überschritten wird, und wobei Abstimmfrequenzen mit den zugehörigen Einstellwerten für die Transformationselemente des Antennenanpaßgerätes (3) in der Steuereinrichtung (5) gespeichert werden, und im Frequenzsprungbetrieb mit den Sendefrequenzen (fₛ) das Antennenanpaßgerät nur noch zwischen diesen Abstimmfrequenzen umgeschaltet wird, dadurch **gekennzeichnet**, daß für das Gesamtfrequenzband die jeweils minimale Bandbreite (B) aller unter verschiedenen Umgebungsbedingungen der Antenne gemessenen Bandbreitenwerte als Funktion der Frequenz (f) bestimmt und in einem der Steuereinrichtung (5) zugeordneten Speicher (6) als Funktionskurve (a bis c) gespeichert wird und vor Aufnahme des Frequenzsprungbetriebes am Betriebsort der Antenne die Abstimmfrequenzen (f₂, f₅, f₈, f₁₁, f₁₄, f₁₆) für das Antennenanpaßgerät (3) abhängig von diesen gespeicherten minimalen Bandbreitenwerten bestimmt werden.

2. Verfahren nach Anspruch 1, dadurch **gekennzeichnet**, daß innerhalb des Gesamtfrequenzbandes in vorbestimmten Frequenzabständen jeweils unter verschiedenen Umgebungsbedingungen der Antenne die Bandbreite der Antennen/Antennenanpaßgerät-Einheit gemessen und davon der jeweils minimale Wert ermittelt wird und der daraus gewonnene Bandbreiten/Frequenz-Funktionsverlauf (a) in einen geglätteten Funktionsverlauf (b, c) umgewandelt wird, deren Bandbreitenwerte stets kleiner als die ermittelten minimalen Bandbreitenwerte sind.

3. Verfahren nach Anspruch 2, dadurch **gekennzeichnet**, daß der geglättete Funktionsverlauf (b) so gewählt wird, daß er möglichst breite Abschnitte (bᵢ) von konstanter Steigung aufweist.

4. Verfahren nach Anspruch 3, dadurch **gekennzeichnet**, daß der geglättete Funktionsverlauf (b) so gewählt wird, daß er möglichst breite Abschnitte von konstanter Bandbreite (B) aufweist.

5. Verfahren nach einem der vorhergehenden Ansprüche, dadurch **gekennzeichnet**, daß vor Aufnahme des Frequenzsprungbetriebes am Betriebsort der Antenne die Abstimmfrequenzen für das Antennenanpaßgerät (3) nur in dem oder den vorgegebenen Frequenzintervall(en) (I, II) bestimmt werden.

6. Verfahren nach einem der vorhergehenden Ansprüche, dadurch **gekennzeichnet**, daß die Frequenzintervalle (I, II) durch Abstimmbereiche abgedeckt sind, die entsprechend den tatsächlich benutzten Sendefrequenzen (fₛ) entsprechen und nicht aneinander anschließen (L)

7. Verfahren nach einem der vorhergehenden Ansprüche, dadurch **gekennzeichnet**, daß vor Aufnahme des Frequenzsprungbetriebes am Betriebsort der Antenne bei mindestens einer Frequenz (f_{z}) des Gesamtfrequenzbandes oder bei mindestens einer Frequenz der oder des benutzten Frequenzintervalle(s) (I, II) die Bandbreite (B) der Antennen/Antennenanpaßgerät-Einheit gemessen und mit dem für diese Frequenz gespeicherten minimalen Bandbreitenwert (bᵢ₎ verglichen wird und bei gemessenem kleineren Bandbreitenwert die gespeicherten Bandbreitenwerte des Gesamtfrequenzbandes bzw. der oder des benutzten Frequenzintervalle(s) entsprechend zu kleineren Werten korrigiert werden, wobei die anschließende Bestimmung der Abstimmfrequenzen für das Antennenanpaßgerät mit diesen korrigierten Werten durchgeführt wird.

## Claims

1. Procedure for the impedance matching of a radio-frequency transmitter (1), which is rapidly switched between different transmission frequencies (fₛ), in accordance with the frequency jumping procedure, by means of control equipment (5), within at least one pre-determined frequency interval (I, II) of a broad total frequency band, using an antenna matching device (3), mounted between the transmitter (1) and the antenna (4), which is also tuneable to any frequency desired, within the total frequency band, by means of the control equipment (5), and which, if the antenna is included, is structured in such a way that, in the range surrounding the tuning frequency of the antenna matching device, within a tuning range with a pre-determined band width (B₁), a pre-determined mismatch is not exceeded, and with tuning frequencies being stored with the associated setting values for the transformation elements of the antenna matching device (3) in the control equipment (5), and with the antenna matching device being switched only between these tuning frequencies during frequency jumping operation with the transmission frequencies (fₛ) - distinguished by the fact that in each case the minimum band width (B) of all band width values measured under various ambient conditions for the antenna is determined for the total frequency band as a function of the frequency (f), and is stored in a memory (6) associated with the control equipment (5) as function curves (a to c), and that, before the start of the frequency jumping operation at the operating location, the tuning frequencies (f₂, f₅, f₈, f₁₁, f₁₄, f₁₆) for the antenna matching device (3) are determined, depending on these stored minimum band width values.

2. Procedure as Claim 1, distinguished by the fact that within the total frequency band, at pre-determined frequency intervals, in each case under different ambient conditions for the antenna, the band width of the antenna / antenna matching device unit is measured, and the minimum value for this is established in each case, and the band width / frequency function curve (a) obtained from this is converted into a flattened function curve (b, c), the band width value of which is always smaller than the minimum band width values determined.

3. Procedure as Claim 2, distinguished by the fact that the flattened function curve (b) is selected in such a way that it displays sections (bᵢ) as broad as possible with a constant gradient.

4. Procedure as Claim 3, distinguished by the fact that the flattened function curve (b) is selected in such a way that it displays sections as broad as possible with a constant band width (B).

5. Procedure as one of the preceding claims, distinguished by the fact that, before the start of the frequency jumping operation at the operating location of the antenna, the tuning frequencies for the antenna matching device (3) are determined only within the pre-set frequency interval(s) (I, II).

6. Procedure as one of the preceding claims, distinguished by the fact that the frequency intervals (I, II) are covered by tuning ranges which correspond accordingly to the transmission frequencies (fₛ) actually used and do not lie adjacent to one another (L).

7. Procedure as one of the preceding claims, distinguished by the fact that, before the start of the frequency jumping operation at the operating location of the antenna, the band width (B) of the antenna / antenna matching device unit is measured, for at least one frequency (fz) of the frequency interval or intervals used (I, II), and is compared with the minimum band width value (bᵢ) stored for this frequency and, if the band width value measured is smaller, the stored band width values of the total frequency band or of the frequency interval or intervals used are correspondingly corrected to smaller values, while the subsequent determination of the tuning frequencies for the antenna matching device is carried out with these corrected values.

## Revendications

1. Procédé d'adaptation d'impédance d'un émetteur à haute fréquence (1) fonctionnant selon le procédé à saut de fréquence, à l'aide d'une installation de commande (5) dans laquelle on commute, au moins entre un intervalle de fréquence prédéterminé (I, II) d'une bande totale de fréquences, large, rapidement entre les différentes fréquences d'émission (fₛ), en utilisant un adaptateur d'antenne (3) placé entre l'émetteur (1) et l'antenne (4), cet adaptateur étant accordé le cas échéant par l'installation de commande (5) à l'intérieur de toute la bande des fréquences, sur une fréquence quelconque qui est réalisée en utilisant l'antenne pour que, dans l'environnement de la fréquence d'accord, l'adaptateur d'antenne ne dépasse pas une erreur d'adaptation prédéterminée, à l'intérieur d'une plage de fréquences de largeur de bande (B₁) prédéterminée, et les fréquences d'accord avec les valeurs de réglage correspondantes, pour les éléments de transformation de l'adaptateur d'antenne (3), sont enregistrées dans l'installation de commande (5) et, en mode de fonctionnement avec saut de fréquence, pour les fréquences d'émission (fₛ), l'adaptateur d'antenne ne commute qu'entre ces fréquences d'accord,
caractérisé en ce que
pour toute la bande des fréquences on détermine chaque fois des largeurs de bande minimales (B) pour tous les conditionnements d'environnement différents des largeurs de bande mesurées de l'antenne en fonction de la fréquence (f) et, dans une mémoire (6) associée à l'installation de commande (5), on enregistre comme courbe de fonction (a...c) et, avant d'assurer le fonctionnement à saut de fréquence à l'emplacement de l'utilisation de l'antenne, on détermine les fréquences d'accord (f₂, f₅, f₈, f₁₁, f₁₄, f₁₆) pour l'adaptateur d'antenne (3), en fonction des largeurs de bande minimales mises en mémoire.

2. Procédé selon la revendication 1,
caractérisé en ce qu'
à l'intérieur de toute la bande de fréquences, à des intervalles de fréquence prédéterminés, chaque fois dans les conditions d'environnement différentes de l'antenne, on mesure la largeur de bande de l'ensemble antenne/adaptateur d'antenne et, à partir de là, on détermine la valeur minimale respective, et la courbe de la fonction largeur de bande/fréquence ainsi obtenue (a) est transformée en une fonction lissée (b, c) dont les valeurs de largeur de bande sont toujours inférieures aux valeurs de largeur de bande minimales obtenues.

3. Procédé selon la revendication 2,
caractérisé en ce que
le tracé de fonction lissée (b) est choisi pour avoir des segments aussi larges que possible (bᵢ) de pente constante.

4. Procédé selon la revendication 3,
caractérisé en ce que
le tracé de fonction lissée (b) est choisi pour avoir des segments aussi larges que possible à largeur de bande constante (B).

5. Procédé selon l'une des revendications précédentes,
caractérisé en ce qu'
avant de mettre en oeuvre le fonctionnement à saut de fréquence à l'emplacement d'utilisation de l'antenne, on définit les fréquences d'accord de l'adaptateur d'antenne (3) seulement dans le ou les intervalles de fréquence prédéterminés (I, II).

6. Procédé selon l'une des revendications précédentes,
caractérisé en ce que
les intervalles de fréquence (I, II) sont couverts par les plages d'accord qui correspondent aux fréquences d'émission (fₛ) effectivement utilisées et qui ne sont pas directement adjacentes (L).

7. Procédé selon l'une des revendications précédentes,
caractérisé en ce qu'
avant de mettre en oeuvre le fonctionnement à saut de fréquence à l'emplacement d'utilisation de l'antenne, pour au moins une fréquence (f_{z}) appartenant à toute la bande des fréquences ou pour au moins une fréquence du ou des intervalles de fréquence utilisés (I, II), on mesure la largeur de bande (B) de l'unité antenne/adaptateur d'antenne et on compare avec la largeur de bande minimale (bᵢ) mise en mémoire pour cette fréquence et, pour une largeur de bande plus petite mesurée, on corrige les largeurs de bande mises en mémoire de l'ensemble de la bande de fréquences ou du ou des intervalles de fréquence utilisés, vers des valeurs plus petites, et la détermination consécutive des fréquences d'accord pour l'adaptateur d'antenne est alors effectuée avec de telles valeurs corrigées.
